# EUROPÄISCHE PATENTSCHRIFT

(11) **EP 0 726 855 B1**
(45) Veröffentlichungstag und Bekanntmachung des Hinweises auf die Patenterteilung: **03.02.1999**
(21) Anmeldenummer: 94930981.9
(22) Anmeldetag: 26.10.1994
(51) Int. Cl.: B60T 8/36, F16K 31/06

(54) **DRUCKREGELVENTIL**
PRESSURE CONTROL VALVE
SOUPAPE REGULATRICE DE PRESSION

(30) Priorität: 05.11.1993 DE 4337763
(43) Veröffentlichungstag der Anmeldung: 21.08.1996
(73) Patentinhaber: Continental Teves AG & Co. oHG, 60488 Frankfurt (DE)
(72) Erfinder: FEIGEL, Hans-Jörg, D-61191 Rosbach (DE); NEUMANN, Ulrich, D-64380 Rossdorf (DE); SCHIEL, Lothar, D-65719 Hofheim (DE)
(86) Internationale Anmeldenummer: EP9403524
(87) Internationale Veröffentlichungsnummer: WO9512509

(56) Entgegenhaltungen:
- EP-A- 0 413 172
- WO-A-92/22451
- DE-C- 1 214 963
- DE-C- 2 909 504
- FR-A- 2 208 078
- US-A- 4 860 794
- US-A- 4 938 545

## Beschreibung

Die Erfindung betrifft ein Druckregelventil, insbesondere elektrisch ansteuerbares Mehrwegeventil für schlupfgeregelte hydraulische Bremsanlagen nach dem Oberbegriff des Anspruchs 1.

Aus der DE 29 09 504 C2 ist bereits ein Druckregelventil bekannt geworden, bei dem zum Zwecke der Druckregelung der Ventilstößel als Schieberventil ausgebildet ist, um in einer ersten Schaltstellung eine Druckmittelverbindung zwischen einem ersten und einem zweiten Druckmittelanschluß herzustellen, sowie in einer zweiten Schaltstellung des Ventilschiebers die vorgenannten Druckmittelanschlüsse zu trennen. In der dritten Schaltstellung öffnet der Ventilstößel ein Kugelrückschlagventil, womit ein weiterer Druckmittelanschluß zum zweiten Druckmittelanschluß freigegeben wird.

Das Druckregelventil hat jedoch den Nachteil, daß der Ventilschieber einerseits eine hohe Passungsgenauigkeit erfordert, um herstellungs- sowie temperaturabhängige Leckageströme beherrschen zu können, andererseits ist auch keine Maßnahme vorgesehen, um im Fall eines Verklemmens des Ventilschiebers in der Schließstellung den Druckabbau im angeschlossenen Leitungssystem sicherstellen zu können.

In der gattungsbildenden FR-A-2208078 (Figur 10) ist ein Druckregelventil beschrieben, daß in einem Ventilgehäuse ein mit zwei Verschlußkörpern versehener Ankerstößel aufweist, der zur Ausführung einer Hubbewegung einen hydraulisch oder pneumatisch beaufschlagten Arbeitskolben aufweist. In der Grundstellung des Ankerstößels ist unter Wirkung einer Druckfeder der Arbeitskolben auf Anschlag am Ventilgehäuse positioniert. Hierdurch ist eine Druckmittelverbindung zwischen einem ersten Druckmittelkanal und einem zweiten Druckmittelkanal infolge des von einem Ventilsitz am Ventilgehäuse abgehobenen Verschlußkörpers vorhanden. Der weitere Verschlußkörper am Ankerstößel trennt die Druckmittelvebindung zwischen einem dritten Druckmittelanschluß und den übrigen beiden Druckmittelanschlüssen, die infolge der Grundstellung des Ankerstößels miteinander verbunden sind. Am Ankerstößel sind beiderseits der Verschlußkörper Anschläge vorgesehen, die die Endposition jedes Verschlußkörpers am Ankerstößel definieren. Zwischen den beiden Verschlußkörpern ist eine Druckfeder eingespannt, die in Abhängigkeit von der Schaltstellung des Ankerstößels mehr oder weniger komprimiert ist. Soll eine Druckmittelverbindung zwischen dem zweiten Druckmittelanschluß, der beispielsweise zu einem Radbremszylinder führt und dem dritten Druckmittelanschluß hergestellt werden, so wird der Arbeitskolben entgegen der Wirkung der Druckfeder durch einen pneumatischen oder hydraulischen Druck verschoben, bis der ursprünglich zwischen dem ersten und zweiten Druckmittelanschluß offengeschaltete Verschlußkörper an seinem Ventilsitz anliegt und der weitere Verschlußkörper durch den ihm zugeordnete Anschlag von seinem Ventilsitz abhebt.

Der Ankerstößel ist nicht hydraulisch druckausgeglichen und eine Reduzierung des Drucks im Radbremszylinders ist ausschließlich durch eine Rückstellbewegung des Ankerstößels möglich, wobei die Rückstellbewegung durch pneumatische oder hydraulische Vorsteuerkomponenten zustande kommt, die den Arbeitskolben unter einen gewünschten Vorsteuerdruck setzen.

Daher ist es die Aufgabe der Erfindung, ein Druckregelventil der gattungsbildenden Art dahingehend zu verbessern, daß mit einfachen Mitteln eine funktionssichere Druckregelung und ein kompakter, miniaturisierter Aufbau gewährleistet ist, und daß die Nachteile der gattungsbildenden Art behoben werden.

Erfindungsgemäß wird diese Aufgabe für ein Druckregelventil der gattungsbildenden Art durch die kennzeichnenden Merkmale des Patentanspruchs 1 gelöst.

Die Merkmale und Vorteile der Erfindung werden nachfolgend anhand eines Ausführungsbeispiels erläutert.

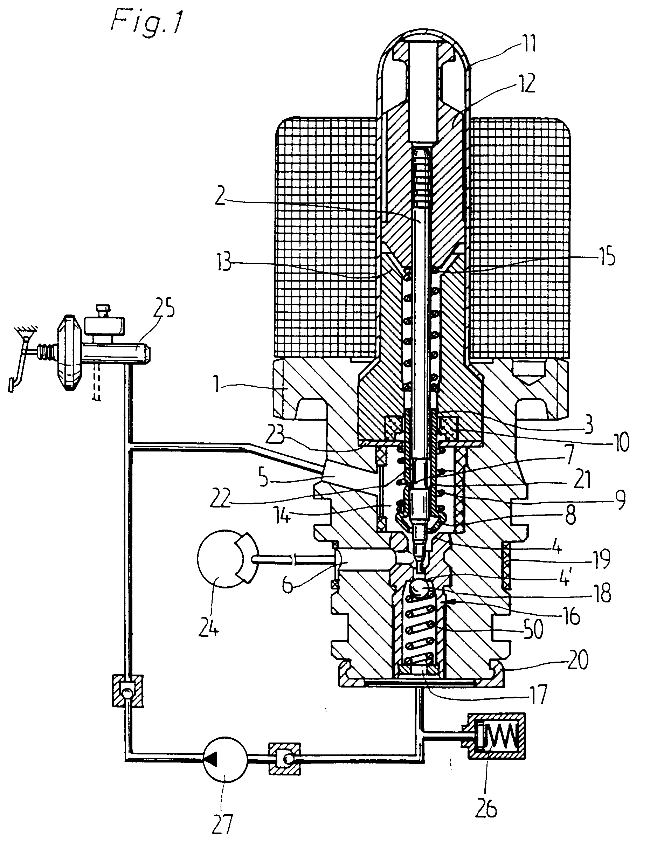

Die einzige Figur 1 zeigt ein in mehrfach vergrößertem Längsschnitt dargestelltes Druckregelventil, dessen Ventilgehäuse 1 in Patronenbauweise (Verstemm-, Schraub-, Klemmpatrone) hergestellt ist. Im aus Stahl- oder einer Leichtmetallegierung hergestellten Ventilgehäuse 1 ist eine im Tiefziehverfahren gefertigte Ventilhülse 11 mit einem Magnetanker 12 durch ein im Endbereich an der Ventilhülse 11 angebrachte Verstemmung gehalten. Im Dombereich der Ventilhülse 11 befindet sich der als Proportionalmagnet ausgeführte Magnetanker 12, an dem der Ventilstößel 2 angebracht ist, der sich durch eine Bohrung des Magnetkerns 13 bis in einen das sogenannte weitere Ventilschließglied 3 aufweisenden Druckraum 14 erstreckt. Eine Ventilspule ist auf die Ventilhülse 11 aufgesteckt, die für die elektromagnetische Betätigung des Magnetankers 12 sorgt. In der elektromagnetisch nicht erregten Grundstellung des Druckregelventils hält eine zwischen dem Magnetkern 13 und dem Magnetanker 12 eingespannte Feder 15 den Ventilstößel 2 in der die Druckmittelverbindung zwischen einem ersten Druckmittelanschluß 5 und einem zweiten Druckmittelanschluß 6 freigebenden Grundstellung. Der erste Druckmittelanschluß 5 mündet oberhalb des hülsenförmigen Ventilschließgliedes 3 in den Druckraum 14 ein, während der zweite Druckmittelanschluß 6 im Bereich des die beiden Ventilsitze 4, 4' aufweisenden unteren Abschnitt in den Druckraum 14 einmündet. Beide zueinander diametral angeordneten Ventilsitze 4, 4' sind als Kegeldichtsitze in einem hülsenförmigen Ventileinsatz 16 angeordnet, der vorzugsweise mittels einer Selbstverstemmung in dem nach unten verengten und als Stufenbohrung ausgebildeten Druckraum 14 befestigt ist. Ein in Richtung der Ventilsymmetrieachse von unten in das Ventilgehäuse 1 einmündender dritter Druckmittelanschluß 17 ist mittels eines im Ventileinsatz 16 federkraftbeaufschlagten Ventilschließgliedes 18 von den zuvor beschriebenen Druckmittelanschlüssen 5, 6 in der ventilgrundstellung getrennt. Zum Zwecke der Ventilreinheit befinden sich innerhalb oder außerhalb des Ventilgehäuses 1 Ringfilter 19 bzw. Plattenfilter 20. Ein für die Erfindung wesentliches Merkmal ist in der Anordnung und im Zusammenwirken des mit dem Ventilstößel 2 koaxial mitgeführten, sogenannten weiteren Ventilschließgliedes 3 zu sehen. Dieses Ventilschließglied 3 ist als Hülse ausgebildet und über einen Mitnehmer 7 jeweils am Übergangsbereich des am Ventilstößel 2 eingeschnürten Querschnitts in seiner Hubbewegung begrenzt, so daß in der inaktiven Grundstellung des Druckregelventils der als Nase in die Hülse eingeprägte Mitnehmer 7 am unteren Bund 21 des eingeschnürten Schaftquerschnitts anliegt. Ferner ist ein zweiter Bund 22 am Ventilstößel 2 vorgesehen, so daß der Mitnehmer 7 zwischen dem ersten und zweiten Bund 21,22 geführt ist. Das hülsenförmige Ventilschließglied 3 kann als einfaches Dünnblechteil aus Rohrstangenmaterial hergestellt werden, so daß sich hierdurch auch mittels spanloser Umformung relativ leicht der kegelförmige Ventilschließkörper 8 und der Mitnehmer 7 präzise herstellen lassen. Der hülsenförmige Ventilschließkörper 3 ermöglicht gleichzeitig durch sein für die Bewegungsfreiheit erforderliches Passungsspiel auf dem Ventilstößel 2 eine Bypassverbindung zwischen dem zweiten und dem ersten Druckmittelanschluß 6, 5, so daß durch Absenkung des Hauptzylinderdrucks im ersten Druckmittelanschluß 5 über die Ringmanschette 10 aus dem zweiten Druckmittelanschluß 6 (Radbremse) Druckmittel zum Hauptzylinder 24 entweichen kann. Gemäß der Abbildung ist die Ringmanschette 10 in der unteren Bohrungsstufe des Magnetkerns 13 eingesetzt und durch eine vorgelegte Scheibe 23, die zwischen dem Magnetkern 13 und der Stufenbohrung des Ventilgehäuses 2 eingespannt ist, sicher positioniert. Die Ringmanschette 10 ist als Rückschlagventil ausgebildet und öffnet von der Radbremse 24 zum Hauptzylinder 25. Der Magnetanker steht unter Raddruck.

Im nachfolgenden wird die Funktionsweise des Druckregelventils in Verbindung mit einer schlupfgeregelten hydraulischen Bremsanlage erläutert.

Die Abbildung zeigt das Druckregelventil in der elektromagnetisch nicht erregten Schaltstellung, die bei Verwendung des Ventils für eine schlupfgeregelte Bremsanlage gleichzeitig der Bremslösestellung und der Normalbremsphase entspricht, in der eine ungehinderte Druckmittelverbindung vom Hauptzylinder 25 über den ersten Druckmittelanschluß 5, das Ringfilterelement 19, das geöffnete hülsenförmige Ventilschließglied 3 sowie über den Durchlaßquerschnitt zwischen Ventileinsatz 16 und Ventilstößel 2 zum zweiten Druckmittelanschluß 6 besteht, der mit der Radbremse 24 verbunden ist.

Beim Auftreten von unzulässig hohen Radschlupfsignalen, die bei einer Überbremsung von geeigneten Mitteln einer Signalauswerteelektronik erkannt werden, erfolgt eine vorzugsweise stromgesteuerte Erregung der Spule 15, so daß der Magnetanker 12 eine stromproportionale Hubbewegung vollzieht, die zum Schließen des über den Mitnehmer 7 am Stößel 2 geführten hülsenförmigen Ventilschließgliedes 3 führt. Der im Druckraum 14 anstehende Druck (Hauptzylinder-und/oder Pumpendruck) kann sich somit nicht in den zweiten Druckmittelanschluß 6, das heißt zur Radbremse 24 fortpflanzen, so daß sich das Druckregelventil in der Druckhaltephase befindet. Die Druckfeder 50 stützt das Ventilschließglied 18 ab und hält sie am Ventilsitz 4' gegen den eingespannten Druck in der Kammer der Druckmittelverbindung 6 (Radanschluß) dicht.

Zur Einleitung der Druckabbauphase in der Radbremse 24, wird der Magnetanker 12 voll ausgesteuert, so daß eine weitere Hubbewegung des Ventilstößels 2 zum Aufstoßen des Kugelrückschlagventils führt, womit der Radbremsdruck über den zweiten Druckmittelanschluß 6 und über den dritten Druckmittelanschluß 17 zu einem Druckmittelsammler 26 gelangt, der in der Regel mit einer Druckmittelpumpe 27 verbunden ist. Spätestens mit der Einleitung der Druckabbauphase muß die Pumpe 27 aktiviert werden, um einerseits einen raschen Bremsdruckabbau zu begünstigen, andererseits dem Hauptzylinder 25 bzw. dem Druckregelventil zu Beginn eines erneuten Druckaufbauzyklus genügend Druckmittel bereitzustellen.

Bedarf es während der Druckhalte- oder Druckaufbauphase einer Übersteuerung der elektrohydraulischen Druckmodulation in Sinne eines manuell über den Hauptzylinder 25 ausgelösten Druckabbaus (Bremspedal bewegt sich in Lösestellung), so kann jederzeit eine Druckabsenkung in der Radbremse 24 über die als Bypasskanal zwischen dem Ventilstößel 2 und dem Ventilschließglied 3 wirkende Spielpassung in Richtung der zum Hauptzylinder 25 öffnenden Rückschlagmanschette 10 erfolgen.

Die Erfindung zeichnet sich durch eine besonders geräuscharme, einfache und kompaktbauende Ventilkonstruktion aus, die die Vorteile der bisher bekannten als 2/2-Wegeventile ausgeführten ABS-Einlaß- und Auslaßsitzventile mit einer analogen Ventilsteuerung vereinigt. In der beschriebenen Erfindung hat der Hauptzylinderdruck keinen Einfluß auf die Magnetkräfte, da infolge der Verwendung eines als Sitzventil wirksamen Einlaßventilschließgliedes der Tandemhauptzylinderdruck ausgeglichen ist. Kleine Spulen mit geringem Leistungsbedarf können zur Anwendung gelangen. Ferner ist aufgrund der vorgeschlagenen Druckregelung zwischen dem zweiten und dem dritten Druckmittelanschluß eine Vereinfachung der Elektronik möglich, da keine zusätzlichen elektrischen Aktuatoren zur Betätigung des Kugelrückschlagventils erforderlich sind.

### Bezugszeichenliste

- 1: Ventilgehäuse
- 2: Ventilstößel
- 3: Ventilschließglied
- 4, 4': Ventilsitz
- 5: Druckmittelverbindung
- 6: Druckmittelverbindung
- 7: Mitnehmer
- 8: Ventilschließkörper
- 9: Druckfeder
- 10: Rückschlagmanschette
- 11: Ventilhülse
- 12: Magnetanker
- 13: Magnetkern
- 14: Druckraum
- 15: Feder
- 16: Ventileinsatz
- 17: Druckmittelanschluß
- 18: Ventilschließglied
- 19: Ringfilter
- 20: Plattenfilter
- 21: Bund
- 22: Bund
- 23: Scheibe
- 24: Radbremse
- 25: Hauptzylinder
- 26: Druckmittelsammler
- 27: Pumpe
- 50: Druckfeder

## Patentansprüche

1. Druckregelventil, insbesondere elektrisch ansteuerbares Mehrwegeventil für schlupfgeregelte hydraulische Bremsanlagen, mit einem im Ventilgehäuse (1) axial beweglich angeordneten Ventilstößel (2), der in einer ersten Schaltstellung eine Druckmittelverbindung zwischen einem in das Ventilgehäuse (1) einmündenden ersten Druckmittelanschluß (5) und einem in das Ventilgehäuse (1) einmündenden zweiten Druckmittelanschluß (6) herstellt, der in einer zweiten Schaltstellung die Druckmittelverbindung zwischen dem ersten Druckmittelanschluß (5) und dem zweiten Druckmittelanschluß (6) trennt und der in einer dritten Schaltstellung eine Druckmittelverbindung zwischen dem zweiten Druckmittelanschluß (6) und einem dritten Druckmittelanschluß (17) herstellt, wozu ein vom Ventilstößel (2) axial verschiebbares Ventilschließglied (18) von seinem Ventilsitz (4') getrennt ist, und wobei relativ zum Ventilstößel (2) verschiebbar im Ventilgehäuse (1) ein weiteres Ventilschließglied (3) angeordnet ist, das an einem im Ventilgehäuse (1) angeordneten weiteren Ventilsitz (4) anlegbar ist und die Druckmittelverbindung des ersten Druckmittelanschlusses (5) mit dem zweiten Druckmittelanschluß (6) herstellt und in der zweiten und dritten Schaltstellung des Ventilstößels (2) trennt, dadurch **gekennzeichnet**, daß das weitere Ventilschließglied (3) als koaxial zum Ventilstößel (2) ausgerichtetes Sitzventil ausgebildet ist, das mit einer Spielpassung formschlüssig am Ventilstößel (2) geführt ist, und daß an der Außenwandung des weiteren Ventilschließgliedes 3) eine Ringmanschette (10) angeordnet ist, die in der Schließstellung des weiteren Ventilschließgliedes (3) eine Druckmittelzufuhr aus dem ersten Druckmittelanschluß (5) zum zweiten Druckmittelanschluß (6) sperrt und in umgekehrter Richtung den zweiten Druckmittelanschluß (6) mit dem ersten Druckmittelanschluß (5) verbindet.

2. Druckregelventil nach Anspruch 1, dadurch **gekennzeichnet**, daß der Formschluß durch einen am verkleinerten Schaftquerschnitt des Ventilstößels (2) anliegenden Mitnehmer (7) des weiteren Ventilschließgliedes (3) gebildet ist.

3. Druckregelventil nach Anspruch 2, dadurch **gekennzeichnet**, daß der Mitnehmer (7) zwischen einem ersten und zweiten Bund (21,22) am Ventilstößel (2) geführt ist, und daß der Mitnehmer (7) aus einer partiellen Einschnürung am weiteren Ventilschließglied (3) gebildet ist.

4. Druckregelventil nach mindestens einem der vorhergehenden Ansprüche, dadurch **gekennzeichnet**, daß das weitere Ventilschließglied (3) im wesentlichen die Form einer Hülse aufweist.

5. Druckregelventil nach Anspruch 1, dadurch **gekennzeichnet**, daß die Hülse des weiteren Ventilschließgliedes (3) auf der dem weiteren Ventilsitz (4) zugewandten Seite einen kegelstumpfförmigen Ventilschließkörper (8) aufweist, der vom Ventilstößel (2) koaxial durchdrungen ist.

6. Druckregelventil nach mindestens einem der vorhergehenden Ansprüche, dadurch **gekennzeichnet**, daß das weitere Ventilschließglied (3) von einer in Ventilschließrichtung wirksamen Druckfeder (9) beaufschlagt ist.

## Claims

1. Pressure control valve, especially an electrically energizable multiway valve for slip-controlled hydraulic brake systems, with a valve lifter (2) which is arranged axially movably in the valve housing (1) and establishes a pressurized medium communication between a first pressurized medium connection (5) opening into the valve housing (1) and a second pressurized medium connection (6) opening into the valve housing (1) in a first switching position, severs the pressurized medium communication between the first pressurized medium connection (5) and the second pressurized medium connection (6) in a second switching position, and which establishes a pressurized medium communication between the second pressurized medium connection (6) and a third pressurized medium connection (17) in a third switching position, for which purpose a valve-closing member (18), which is axially displaceable by the valve lifter (2), is separated from its valve seat (4'), and wherein an additional valve-closing member (3) is arranged displaceably in the valve housing (1) relative to the valve lifter (2) and is movable into contact with a second valve seat (4) arranged in the valve housing (1), and establishes the pressurized medium communication of the first pressurized medium connection (5) to the second pressurized medium connection (6) and severs it in the second and third switching position of the valve lifter (2),
characterized in that the additional valve-closing member (3) is designed as a seat valve aligned coaxially to the valve lifter (2), and is guided with a clearance fit on the valve lifter (2) in a positive-locking manner, and in that a non-return cuff (10) is fitted to the outside wall of the second valve-closing member (3) and, in the closing position of the second valve-closing member (3), severs pressure fluid supply from the first pressurized medium connection (5) to the second pressurized medium connection (6) and, in the reverse direction, connects the second pressurized medium connection (6) to the first pressurized medium connection (5).

2. Pressure control valve as claimed in claim 1,
characterized in that the positive locking is formed by a carrier (7) of the additional valve-closing member (3), which carrier is in contact with the reduced shaft cross section of the valve lifter (2).

3. Pressure control valve as claimed in claim 2,
characterized in that the carrier (7) is guided between a first and second shoulder (21, 22) on the valve lifter (2), and that the carrier (7) is formed by a partial waist on the valve-closing member (3).

4. Pressure control valve as claimed in at least one of the preceding claims,
characterized in that the additional valve-closing member (3) has essentially the shape of a sleeve.

5. Pressure control valve as claimed in claim 1,
characterized in that the sleeve of the additional valve-closing member (3) has, on the side facing the additional valve seat (4), a truncated cone-shaped valve-closing body (8), which is coaxially traversed by the valve lifter (2).

6. Pressure control valve as claimed in at least one of the preceding claims,
characterized in that the additional valve-closing member (3) is loaded by a compression spring (9) acting in the valve closing direction.

## Revendications

1. Valve de régulation de pression, notamment valve à plusieurs voies à commande électrique pour système hydraulique de freinage à régulation du glissement, comprenant une tige-poussoir de valve (2), disposée dans le boîtier de valve (1) de manière à être mobile axialement, qui, dans une première position de commutation, crée une liaison d'agent de pression entre un premier raccord d'agent de pression (5) débouchant dans le boîtier de valve (1) et un deuxième raccord d'agent de pression (6) débouchant dans le boîtier de valve (1), qui, dans une deuxième position de commutation, bloque la liaison d'agent de pression entre le premier raccord d'agent de pression (5) et le deuxième raccord d'agent de pression (6) et qui, dans une troisième position de commutation, crée une liaison d'agent de pression entre le deuxième raccord d'agent de pression (6) et un troisième raccord d'agent de pression (17), un obturateur de valve (18), pouvant être déplacé axialement par la tige-poussoir de valve (2), étant écarté à cet effet de son siège de valve (4'), tandis qu'il est prévu, disposé dans le boîtier de valve (1) de manière à pouvoir être déplacé par rapport à la tige-poussoir de valve (2), un second obturateur de valve (3) qui peut être appliqué sur un second siège de valve (4) disposé dans le boîtier de valve (1) et qui crée la liaison d'agent de pression du premier raccord d'agent de pression (5) avec le deuxième raccord d'agent de pression (6) et bloque cette liaison dans les deuxième et troisième positions de commutation de la tige-poussoir de valve (2), caractérisée en ce que le second obturateur de valve (3) est réalisé sous forme d'une valve à levée, orientée coaxialement à la tige-poussoir de valve (2), qui est guidée par complémentarité de formes sur la tige-poussoir de valve (2) avec un ajustement avec jeu et en ce qu'il est prévu, disposée sur la paroi extérieure du second obturateur de valve (3), une coupelle annulaire (10) qui, dans la position de fermeture du second obturateur de valve (3), bloque un acheminement d'agent de pression du premier raccord d'agent de pression (5) au deuxième raccord d'agent de pression (6) et, dans la direction opposée, fait communiquer le deuxième raccord d'agent de pression (6) avec le premier raccord d'agent de pression (5).

2. Valve de régulation de pression suivant la revendication 1, caractérisée en ce que la complémentarité de formes est réalisée au moyen d'un élément d'entraînement (7) du second obturateur de valve (3) qui prend appui sur la section transversale de tige réduite de la tige-poussoir de valve (2).

3. Valve de régulation de pression suivant la revendication 2, caractérisée en ce que l'élément d'entraînement (7) est guidé sur la tige-poussoir de valve (2) entre un premier et un second épaulements (21, 22) et en ce que l'élément d'entraînement (7) est formé par une partie repoussée partielle prévue sur le second obturateur de valve (3).

4. Valve de régulation de pression suivant au moins l'une des revendications précédentes, caractérisée en ce que le second obturateur de valve (3) présente essentiellement la forme d'un manchon.

5. Valve de régulation de pression suivant la revendication 1, caractérisée en ce que le manchon du second obturateur de valve (3) comporte, du côté tourné vers le second siège de valve (4), un corps d'obturateur (8) tronconique qui est traversé coaxialement par la tige-poussoir de valve (2).

6. Valve de régulation de pression suivant au moins l'une des revendications précédentes, caractérisée en ce que le second obturateur de valve (3) est soumis à l'action d'un ressort de compression (9) agissant dans le sens de fermeture de valve.
